# FASCICULE DE BREVET EUROPEEN

(11) **EP 2 132 053 B1**
(45) Date de publication et mention de la délivrance du brevet: **12.01.2011**
(21) Numéro de dépôt: 08735692.9
(22) Date de dépôt: 02.04.2008
(51) Int. Cl.: B60H 1/00

(54) **REFROIDISSEMENT D'ORGANES ELECTRIQUES PAR DÉRIVATION D'UN FLUX D'AIR DANS UNE INSTALLATION DE VENTILATION POUR VÉHICULE**
KÜHLUNG ELEKTRISCHER KOMPONENTEN MITTELS ABLENKUNG EINES LUFTSTROMS IN EINEM FAHRZEUGBELÜFTUNGSSYSTEM
COOLING OF ELECTRICAL COMPONENTS BY DIVERTING AN AIR FLOW IN A VEHICLE VENTILATION INSTALLATION

(30) Priorité: 03.04.2007 FR 0702426
(43) Date de publication de la demande: 16.12.2009
(73) Titulaire: Valeo Systèmes Thermiques, 78321 Le Mesnil St Denis Cedex (FR)
(72) Inventeur: QUEINNEC, Jean-Yves, F-78990 Elancourt (FR)
(74) Mandataire: Léveillé, Christophe
(86) Numéro de dépôt international: PCT/EP2008/053939
(87) Numéro de publication internationale: WO 2008/125496

(56) Documents cités:
- EP-A- 1 384 606
- DE-A1- 10 225 293
- DE-A1-102005 013 567
- DE-C1- 10 002 951
- US-A- 5 669 813

## Description

### Domaine technique de l'invention.

La présente invention est du domaine des installations de ventilation, de chauffage et/ou de climatisation, notamment pour l'équipement d'un véhicule automobile, en vue d'améliorer le confort aérothermique de passagers présents dans l'habitacle du véhicule. Elle a pour objet une installation de ventilation d'une pluralité de zones de l'habitacle à partir de flux d'air respectifs, dans laquelle un premier flux d'air exploité pour le refroidissement d'organes électriques est dérivé en cas d'interdiction de la délivrance de ce premier flux d'air.

### Etat de la technique.

Un véhicule automobile est couramment équipé d'une installation principale de ventilation, de chauffage et/ou de climatisation, pour améliorer le confort aérothermique de passagers présents dans l'habitacle du véhicule, à partir d'une modification des paramètres aérothermiques de l'air contenu dans l'habitacle. Les paramètres aérothermiques sont par exemple la température de l'air et/ou le débit de flux d'air délivrés par l'installation principale à l'intérieur de l'habitacle. L'installation principale comprend dans sa généralité une unité de traitement aérothermique et un circuit de distribution d'une pluralité de flux d'air thermiquement traités par l'unité vers des zones à aérer de l'habitacle. A titre d'exemple, ces zones sont réparties en une zone latérale gauche et une zone latérale droite de l'habitacle, et/ou une zone avant et une zone arrière, et/ou encore une zone de pieds et une zone de ventilation élevée, voire une combinaison de ces critères. Une telle installation est apte à délivrer une pluralité de flux d'air présentant des températures et des débits respectifs distincts, pour un confort personnalisé des passagers en liaison avec des requêtes de fonctionnement de l'installation principale formulées par les passagers.

Le circuit de distribution achemine les flux d'air depuis l'unité de traitement aérothermique vers des bouches d'évacuation affectées aux différentes zones à aérer. Les bouches d'évacuation sont communément agencées en aérateur équipé d'un volet d'obturation pour permettre à un passager de régler le débit du flux d'air délivré. Ce volet est manoeuvrable entre une position d'ouverture dans laquelle une évacuation au moins partielle du flux d'air est autorisée, et une position de fermeture dans laquelle une telle évacuation est interdite.

Le circuit de distribution est susceptible de comporter des bouches d'évacuation relativement éloignées de l'unité de traitement aérothermique. Les flux d'air délivrés à travers de telles bouches d'évacuation subissent des pertes de charge importantes. C'est pourquoi il est connu d'équiper le circuit de distribution d'une installation complémentaire de ventilation, qui est apte à accélérer les flux d'air en provenance de l'unité de traitement aérothermique, préalablement à leur délivrance à travers les bouches d'évacuation éloignées. Cette installation de ventilation comprend un pulseur relais qui est communément agencé en pulseur à double turbine. Le pulseur relais est couramment logé à l'intérieur d'un boîtier placé sur le circuit de distribution en interposition entre l'unité de traitement aérothermique et les bouches d'évacuation. A cet effet, le boîtier comporte deux conduits étanches qui logent une turbine respective pour accélérer un flux d'air correspondant, les turbines étant mises en oeuvre à partir d'un moteur électrique commun. Une telle installation de ventilation comprend couramment des moyens de commande de la vitesse de rotation des turbines. On pourra par exemple se reporter aux documents EP1384606 (BEHR GmbH) qui est considéré comme l'art antérieur le plus proche, et DE10002951 (DAIMLER-CHRYSLER AG), qui décrivent dans leur généralité de tels boîtiers.

L'un des flux d'air acheminé par l'installation de ventilation est communément exploité pour le refroidissement d'organes électriques nécessaires au fonctionnement du pulseur relais, ces organes électriques étant placés à l'intérieur du conduit véhiculant ce flux d'air. Ces organes électriques sont par exemple le moteur commun de mise en oeuvre des turbines, les moyens de commande de la vitesse de rotation des turbines, voire un quelconque accessoire électrique participant à la mise en oeuvre du pulseur relais. Dans le cas où un passager ne souhaite pas une délivrance du flux d'air exploité pour le refroidissement des organes électriques, la circulation de ce dernier à l'intérieur de l'installation de ventilation est interrompue et les organes électriques ne sont plus refroidis. Cependant, leur mise en oeuvre doit perdurer pour l'entraînement de la turbine affectée à l'accélération de l'autre flux d'air, et le maintien de leur fonctionnement induit leur échauffement.

### Objet de l'invention.

Le but de la présente invention est de proposer une installation de ventilation de l'habitacle d'un véhicule automobile comprenant au moins un premier conduit et au moins un deuxième conduit distincts dans lesquels circulent respectivement un premier flux d'air et un deuxième flux d'air, le premier flux d'air étant mis en mouvement à l'intérieur du premier conduit par l'intermédiaire d'une première turbine tandis que le deuxième flux d'air est mis en mouvement à l'intérieur du deuxième conduit par l'intermédiaire d'une deuxième turbine, les première et deuxième turbines étant conjointement mises en rotation à partir d'un moteur électrique commun qui est mis en oeuvre par l'intermédiaire d'au moins un organe électrique placé dans le premier conduit pour son refroidissement par le premier flux d'air, cette installation de ventilation permettant de refroidir l'organe électrique à partir du premier flux d'air, indépendamment d'une autorisation et/ou d'une interdiction de délivrance de ce premier flux d'air, par exemple provoquée par une requête personnelle d'un passager du véhicule. Il est également visé par la présente invention de proposer une telle installation de ventilation, dont la structure est souhaitée la plus simple possible et dont l'encombrement est souhaité le plus faible possible, sans affecter la fiabilité du fonctionnement de l'installation de ventilation et notamment sans perturber le confort aérothermique requis par les passagers. La présente invention a aussi pour but de proposer un boîtier constitutif de l'installation de ventilation, qui loge un pulseur relais à double turbine pour l'accélération des flux d'air qui la traversent. Il est enfin visé par la présente invention de proposer une installation principale de ventilation, de chauffage et/ou de climatisation équipée d'une telle installation de ventilation interposée entre une unité de traitement aérothermique de ladite installation principale et des bouches d'évacuation de flux d'air en provenance de cette dernière pour la ventilation de zones à aérer de l'habitacle.

L'installation de la présente invention est une installation de ventilation de l'habitacle d'un véhicule automobile comprenant au moins un premier conduit et un deuxième conduit distincts dans lesquels circulent respectivement un premier flux d'air et un deuxième flux d'air. Le premier flux d'air est mis en mouvement à l'intérieur du premier conduit par l'intermédiaire d'une première turbine tandis que le deuxième flux d'air est mis en mouvement à l'intérieur du deuxième conduit par l'intermédiaire d'une deuxième turbine. Les première et deuxième turbines sont conjointement mises en rotation à partir d'un moteur électrique commun qui est mis en oeuvre par l'intermédiaire d'au moins un organe électrique placé dans le premier conduit pour'son refroidissement par le premier flux d'air.

Selon la présente- invention, l'installation de ventilation est équipée de moyens de dérivation du premier flux d'air vers le deuxième flux d'air.

Les moyens de dérivation sont avantageusement placés sur le premier conduit en aval de l'organe électrique. Les notions aval et amont correspondent à des emplacements relatifs dans l'installation de ventilation au regard du sens de l'écoulement des flux d'air considérés à l'intérieur des conduits.

La mise en oeuvre des moyens de dérivation est préférentiellement placée sous la dépendance d'une interdiction de délivrance du premier flux d'air à travers une bouche d'évacuation affectée au premier conduit.

Ces dispositions sont telles qu'une interdiction de délivrance du premier flux d'air à travers la bouche d'évacuation affectée au premier conduit induit une dérivation de ce premier flux d'air vers le deuxième conduit en aval de l'organe électrique à refroidir. Il en résulte que ladite interdiction de délivrance est respectée, tout en assurant le refroidissement de l'organe électrique par convexion au moyen du premier flux d'air. Plus particulièrement, le premier conduit achemine le premier flux d'air jusqu'à l'organe électrique pour le refroidissement de ce dernier, et ceci dans tous les cas suivants. Par exemple, dans le cas d'une délivrance souhaitée maintenue du premier flux d'air à travers la bouche d'évacuation du premier conduit, ce premier flux d'air est acheminé par le premier conduit jusqu'à cette dernière. Dans le cas d'une requête d'interdiction de délivrance du premier flux d'air à travers la bouche d'évacuation du premier conduit, par le passager notamment, les moyens de dérivation sont mis en oeuvre et le premier flux d'air est dévié vers le deuxième conduit. Le premier flux d'air n'est alors pas délivré à travers la bouche d'évacuation du premier conduit, mais à travers la bouche d'évacuation du deuxième conduit, et son exploitation pour le refroidissement de l'organe électrique est néanmoins avantageusement maintenue.

Dans sa généralité, l'invention propose de dériver un premier flux d'air exploité pour le refroidissement d'au moins un organe électrique, en cas d'une interdiction --de -délivrance de-ce premier flux d'air à travers au moins une bouche d'évacuation qui lui est dédiée. Sans déroger à la règle qui vient d'être énoncée, on comprendra que dans le cas où une pluralité de premiers flux d'air est exploitée pour refroidir des organes électriques respectifs, des moyens de dérivation sont de préférence installés sur chacun des premiers conduits véhiculant respectivement ces premiers flux d'air. On comprendra aussi que dans le cas où un premier flux d'air est délivré par l'intermédiaire de plusieurs bouches d'évacuation affectées à des zones spécifiques de l'habitacle, la condition de dérivation est assujettie à une interdiction de délivrance du premier flux d'air à travers l'ensemble des bouches d'évacuation affectées à ce premier flux d'air. Autrement dit, dans ce cas, la condition pour que le premier flux d'air soit dérivé réside dans le fait que la totalité des bouches d'évacuation de ce premier flux d'air est obturée.

La mise en oeuvre des moyens de dérivation est par exemple placée sous la dépendance indifféremment de moyens de commande et/ou de moyens de détection de ladite interdiction de délivrance du premier flux d'air.

Ces dispositions sont telles que les moyens de dérivation sont mis en oeuvre si et seulement si une interdiction de délivrance du premier flux d'air est commandé et/ou détecté.

Les moyens de dérivation comprennent avantageusement au moins un canal de dérivation reliant entre eux le premier conduit et le deuxième conduit, et au moins un clapet d'obturation qui est placé à l'intérieur du canal de dérivation et qui est muni de moyens de manoeuvre entre des positions d'ouverture et de fermeture.

Le clapet d'obturation est manoeuvrable entre une position d'ouverture dans laquelle un passage du premier flux d'air est autorisé depuis le premier conduit vers le deuxième conduit par l'intermédiaire du canal de dérivation, et une position -de fermeture dans laquelle un-tel passage est interdit.

La mise en oeuvre des moyens de manoeuvre en position d'ouverture du clapet d'obturation est préférentiellement placée sous la dépendance d'une manoeuvre en position de fermeture d'un volet d'interdiction de délivrance du premier flux d'air qui est placé à l'intérieur d'un premier tronçon du premier conduit s'étendant entre les moyens de dérivation et la bouche d'évacuation du premier conduit.

Plus particulièrement, le volet d'interdiction de délivrance du premier flux d'air est constitué d'un volet tambour, d'un volet papillon ou de tout autre organe analogue d'interdiction de délivrance d'un flux d'air. La position de fermeture du volet correspond à une position d'obturation du premier conduit interdisant une circulation du premier flux d'air à travers la bouche d'évacuation qui lui est affecté. Le volet est manoeuvrable manuellement par un passager et/ou par des moyens de manoeuvre motorisés dont la mise en oeuvre est susceptible d'être commandée à partir du tableau de bord et/ou d'une console du véhicule. Ce volet est susceptible d'être placé dans le premier conduit à un quelconque endroit en aval des moyens de dérivation.

L'ensemble de ces dispositions sont telles que lesdits moyens de détection sont susceptibles d'être constitués d'un capteur de position du clapet d'obturation ou analogue, et que lesdits moyens de commande sont susceptibles d'être constitués d'un organe de manoeuvre du clapet d'obturation, cet organe de manoeuvre étant indifféremment de type à commande manuelle ou de type à commande électrique.

La mise en oeuvre des moyens de manoeuvre en position d'ouverture du clapet d'obturation est aussi notamment placée sous la dépendance d'une pressurisation du premier conduit. Une telle pressurisation se caractérise notamment par une augmentation de la pression d'air régnant à l'intérieur dudit premier tronçon au-delà d'une pression de consigne.

Il ressort de ces dispositions que la mise en oeuvre des moyens de manoeuvre du clapet est placée sous la dépendance indifféremment de moyens de détection d'une position de fermeture du volet et/ou de moyens de commande d'une manoeuvre dudit volet en position de fermeture. L'interdiction de délivrance du premier flux d'air résulte notamment d'une requête d'un passager, voire d'une obturation inopinée de la bouche d'évacuation du premier conduit, par des salissures ou des corps étrangers notamment. La mise en oeuvre des moyens de dérivation est susceptible d'être provoquée par des moyens de commande qui leur sont spécifiquement affectés et qui sont en relation avec des moyens de commande généraux de l'installation de ventilation pour la gestion de la circulation des flux d'air à son travers. Ces moyens, de commande spécifiques sont par exemple des moyens de commande d'une manoeuvre à la fermeture du volet qui est placé dans le premier conduit entre les moyens de dérivation et la bouche d'évacuation du premier conduit. La mise en oeuvre des moyens de dérivation est aussi susceptible d'être provoquée par des moyens de détection de ladite interdiction de délivrance du premier flux d'air. De tels moyens de détection sont par exemple constitués par des moyens réactionnels à une pressurisation du premier conduit, ou par des moyens de détection d'une manoeuvre à la fermeture dudit volet.

Cette dépendance des moyens de manoeuvre du clapet au regard de ladite pressurisation est susceptible d'être réalisée à partir de moyens de mesure de la pression d'air régnant à l'intérieur du premier conduit, ces moyens de mesure étant constitutifs des moyens de détection. Cette dépendance est aussi susceptible d'être réalisée à partir d'un montage du clapet autorisant sa manoeuvre spontanée sous l'effet d'une pressurisation du premier conduit supérieure à une pression de consigne, et/ou d'une différence de pression d'air entre le premier conduit et le deuxième conduit.

Un avantage supplémentaire d'une mise sous dépendance de la manoeuvre du clapet au regard d'une pressurisation du premier conduit réside dans une dérivation spontanée du premier flux d'air non seulement en cas d'une requête d'interdiction de sa délivrance par un passager à travers la bouche d'évacuation du premier conduit, mais aussi en cas d'obturation inopinée de ce dernier, telle que provoquée par des éléments intrusifs indésirables ou analogues notamment.

L'installation de ventilation est de préférence équipée de- moyens d'ajustement de la température du premier flux d'air en fonction de la température du deuxième flux d'air à délivrer, dont la mise en oeuvre est placée sous la dépendance de la mise en oeuvre des moyens de dérivation.

La température du premier flux d'air est ajustée soit pour atteindre la température du deuxième flux d'air, soit pour corriger la température du deuxième flux d'air acheminé en amont des moyens de dérivation, pour finalement adapter cette température en fonction de la température de consigne du deuxième flux d'air à délivrer. Selon cette approche, une zone de mixage entre le premier flux d'air et le deuxième flux d'air est susceptible d'être exploitée pour parvenir à la température de consigne du deuxième flux d'air à délivrer, en cas de dérivation du premier flux d'air. Cette zone de mixage correspond plus particulièrement à la zone de jonction entre le deuxième conduit et le canal de dérivation.

L'installation de ventilation est de préférence encore équipée de moyens de variation de la vitesse de rotation des turbines, dont la mise en oeuvre est placée sous la dépendance de la mise en oeuvre des moyens de dérivation.

Ces dispositions sont telles que, le débit du deuxième flux d'air étant modifié par l'apport du premier flux d'air, les moyens de variation de la vitesse de rotation des turbines permet d'adapter le débit du deuxième flux d'air délivré, en fonction des valeurs de consigne à respecter et en fonction du surplus de débit d'air apporté par le premier flux d'air dérivé.

La mise en oeuvre des moyens d'ajustement et/ou des moyens de variation est indifféremment placée sous la dépendance des moyens de détection, des moyens de commande, des moyens de manoeuvre de l'organe de distribution, et/ou de moyens capteurs de la mise en oeuvre des moyens de dérivation.

Il en ressort qu'une dérivation du premier flux d'air vers le deuxième flux d'air n'affecte-pas les paramètres aérothermiques du deuxième flux d'air délivré, malgré le mélange du premier flux d'air avec le deuxième flux d'air dans la zone de jonction entre le deuxième conduit et le canal de dérivation.

L'installation de ventilation est avantageusement agencée en un boîtier aéraulique délimitant les premier et deuxième conduits, et logeant un pulseur relais à double turbine comprenant la première turbine et des balais d'alimentation électrique du pulseur, qui sont placés à l'intérieur du premier conduit, et la deuxième turbine, qui est placée à l'intérieur du deuxième conduit.

Le boîtier est indifféremment formé par assemblage de ces conduits entre eux ou par moulage d'au moins un ensemble monobloc.

L'installation de ventilation loge par exemple des moyens de commande du fonctionnement du moteur électrique commun, qui sont placés au moins partiellement sinon en totalité à l'intérieur du premier conduit.

De préférence, le premier conduit et le deuxième conduit sont chacun successivement composés d'une conduite d'entrée, d'une chambre de réception de la turbine qui leur est affecté, et d'une conduite de sortie.

Ces dispositions sont telles que le boîtier aéraulique est apte à loger un pulseur à double turbine. Une première turbine et des balais d'alimentation -électrique du pulseur sont placés à l'intérieur du premier conduit. Une deuxième turbine est placée à l'intérieur du deuxième conduit. De préférence, le premier conduit et le deuxième conduit comportent des chambres qui sont agencées en volute pour la réception respective des turbines, et qui sont placées en amont des moyens de dérivation.

Selon différentes formes de réalisation de la présente invention, le canal- de dérivation est indifféremment constitué d'un conduit de dérivation interposé entre le premier conduit et le deuxième conduit, ou d'une fenêtre ménagée dans une cloison de séparation entre le premier conduit et le deuxième conduit.

Selon cette forme de réalisation, l'aménagement de l'installation de ventilation peut être aisément réalisé pour intégrer les moyens de dérivation en aval des organes électriques à refroidir. Par exemple, le canal de dérivation est constitué d'un conduit de jonction aéraulique entre le premier conduit et le deuxième conduit. Par exemple encore, le canal de dérivation est constitué d'une fenêtre ménagée à travers une paroi commune du premier conduit et du deuxième conduit. D'une manière générale, la conformation du canal de dérivation est susceptible d'être quelconque dès lors qu'elle ménage un passage d'air entre le premier conduit et le deuxième conduit.

Par exemple, le canal de dérivation est indifféremment ménagé en aval d'une sortie d'air de la première turbine ou en amont d'une entrée d'air de la première turbine.

Le premier conduit est préférentiellement équipé du volet d'interdiction de délivrance du premier flux d'air.

Selon la présente invention, une installation principale de ventilation, de chauffage et/ou de climatisation, comprenant une unité de traitement aérothermique et un circuit de distribution de flux d'air comportant au moins un premier conduit et au moins un deuxième conduit, est principalement reconnaissable en ce que le circuit de distribution intègre une telle installation de ventilation.

Une application avantageuse de la présente invention réside dans le maintien du refroidissement des organes électriques d'un boîtier relais logeant un pulseur à double turbine, qui est utilisé pour accélérer les flux d'air en provenance de l'unité de traitement thermique préalablement à leur délivrance à l'intérieur de l'habitacle. Notamment, les organes électriques à refroidir sont placés au moins en partie dans le premier conduit, et sont plus particulièrement constitués par les balais de mise en relation du moteur du pulseur avec le circuit électrique du véhicule, voire aussi des moyens de commande de la mise en oeuvre du pulseur.

### Description des figures.

La présente invention sera mieux comprise, et des détails en relevant apparaîtront, à la lecture de la description qui vau être faite d'exemples de réalisation en relation avec les figures des planches annexées, dans lesquelles :
Les fig.1 et fig.2 sont des schémas d'une installation principale de ventilation, de chauffage et/ou de climatisation, qui illustrent des modalités respectives de mise en oeuvre d'une installation de ventilation de la présente invention, constitutive de ladite installation principale.
Les fig.3 et fig.4 sont des schémas d'un premier exemple de réalisation d'un boîtier aéraulique constitutif de l'installation de ventilation représentée sur les fig.1 et fig.2, qui illustrent des modes respectifs de fonctionnement de ce boîtier aéraulique.
Les fig.5 et fig.6 sont des schémas d'un deuxième exemple de réalisation d'un boîtier aéraulique constitutif de l'installation de ventilation représentée sur les fig.1 et fig.2, qui illustrent des modes respectifs de fonctionnement de ce boîtier aéraulique.
Les fig.7 et fig.8 sont des schémas d'un troisième exemple de réalisation d'un boîtier aéraulique constitutif de l'installation de ventilation représentée sur les fig.1 et fig.2, qui illustrent des modes respectifs de fonctionnement de ce boîtier aéraulique.

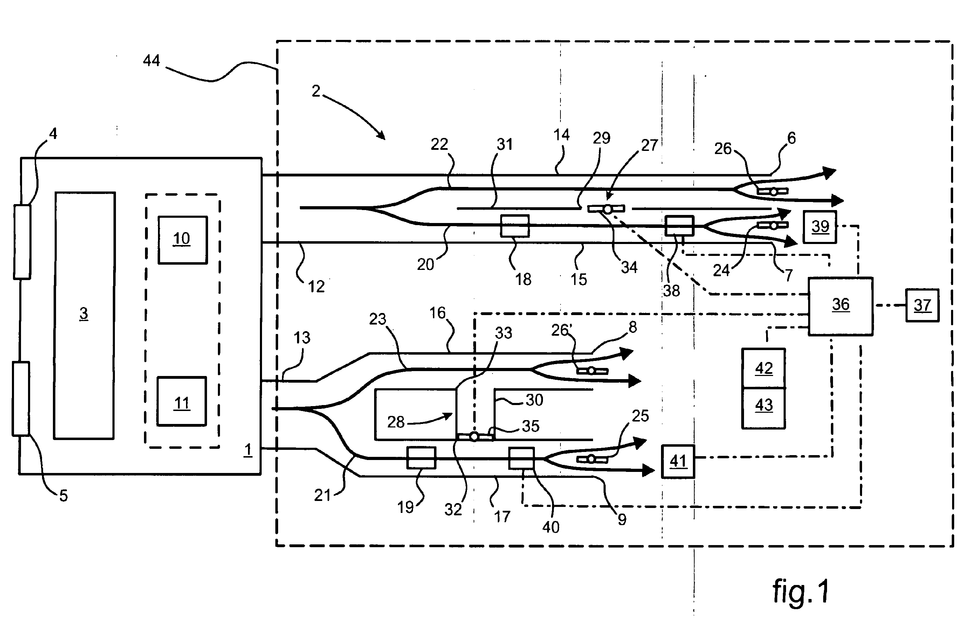

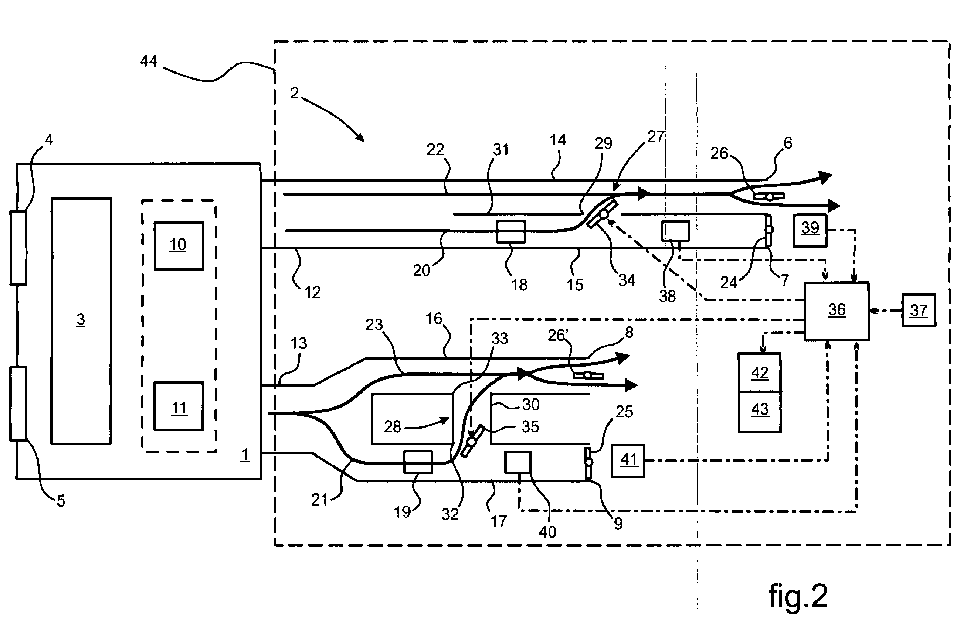

Sur les fig.1 et fig.2, une installation principale de ventilation, de chauffage et/ou de climatisation est destinée à équiper un véhicule automobile, pour améliorer le confort des passagers à partir d'un traitement aérothermique de différentes zones à aérer de -cet habitacle. L'installation principale peut être une installation générale communément placée à l'avant du véhicule, sous une planche de bord par exemple, ou une installation secondaire placée en aval de l'installation générale, pour parfaire le traitement aérothermique procuré par cette dernière. L'installation principale est aussi susceptible d'être une installation auxiliaire, qui est placée en un quelconque endroit de l'habitacle pour le traitement aérothermique autonome et indépendant de l'air contenu dans une ou plusieurs zones spécifiques de l'habitacle. L'installation principale comprend principalement une unité de traitement aérothermique 1 d'air prélevé à l'intérieur et/ou à l'extérieur de l'habitacle, et un circuit de distribution 2 de l'air traité vers les différentes zones à aérer. L'unité de traitement 1 comprend un pulseur principal 3 ou analogue, pour prélever de l'air à l'intérieur et/ou à l'extérieur de l'habitacle à travers des bouches d'admission d'air 4,5, et pour délivrer l'air thermiquement traité à travers le circuit -de distribution 2 vers des bouches d'évacuation 6,7,8,9 affectées aux différentes zones de l'habitacle à aérer. L'air admis à l'intérieur de l'unité de traitement 1 circule à travers des moyens de traitement thermique, tels que radiateur 10, évaporateur 11 ou analogue. Le circuit de distribution 2 comporte une pluralité de conduits d'acheminement 12,13,14,15,16,17 respectif de flux d'air 20,21,22,23 depuis l'unité de traitement thermique 1 vers les bouches d'évacuation 6,7,8,9. Sur la forme représentée de réalisation de l'installation principale, ce circuit de distribution 2 comprend deux conduits principaux 12,13, pour l'aération d'une zone avant et d'une zone arrière par exemple. Chacun de ces conduits principaux 12,13 se subdivisent en deux conduits élémentaires 14,15 et 16,17, pour une répartition latéralisée droite et gauche des flux d'air par exemple. D'une manière générale, l'affectation des bouches d'évacuation 6,7,8,9 à une zone à aérer indiffère, et l'architecture générale de l'installation principale, et notamment du circuit de distribution 2, est susceptible d'être quelconque au regard de ces affectations. A titre indicatif, les zones à aérer peuvent être réparties en une zone latérale gauche et une zone latérale droite de l'habitacle, et/ou une zone avant et une zone arrière, et/ou encore une zone de pieds et une zone aérateur, voire une combinaison de ces critères

Ces zones à aérer sont susceptibles d'être relativement éloignées de l'unité de traitement aérothermique 1 de sorte que des pertes de charges sont susceptibles d'affecter les flux d'air acheminés par le circuit de distribution 2. Il en ressort que le circuit de-distribution 2 est équipé d'une installation complémentaire de ventilation organisée en un boîtier aéraulique 44 logeant un pulseur relais pour accélérer des flux d'air 20,21,22,23 acheminés par les conduits 12,13,14,15,16,17.

Le fonctionnement de l'installation principale est susceptible d'impliquer la présence d'organes électriques 18,19, nécessaires à la mise en oeuvre de l'installation principale, et/ou de l'installation de ventilation, et réputés pouvant s'échauffer. Ces organes électriques 18,19 sont placés dans le circuit de distribution 2 de manière à les refroidir à partir des flux d'air acheminés 20,21,22,23. Ces organes électriques 18,19 peuvent être quelconques, tels que capteurs, cartes de commande, moteurs électriques d'entraînement de turbines ou de manoeuvre d'organes de répartition d'air. Sur l'exemple schématique illustré et au regard de chacun des conduits principaux 12,13, un premier conduit 15,17 véhiculant un premier flux d'air 20,21 loge un ou plusieurs de ces organes électriques 18,19, tandis qu'un deuxième conduit 14,16 achemine un deuxième flux d'air 22,23 inexploité pour le refroidissement de tels organes électriques 18,19. On comprendra que cette configuration est illustrée pour exemple, et que l'invention est applicable à une installation principale comprenant un nombre quelconque de conduits, agencés entre eux de manière quelconque pour l'aération de zones respectives de l'habitacle. Il est à considérer qu'une telle installation principale comprend un circuit de distribution 2 comportant au moins un -dit- premier conduit 15,17 et au moins un dit deuxième conduit 14,16. On comprendra aussi que deux conduits sont susceptibles de loger un ou- plusieurs organes électriques 18,19, et être alternativement considérés respectivement comme un premier conduit 15,17 et comme un deuxième conduit 14,16, selon la consigne d'autorisation ou d'interdiction relative à la délivrance du flux d'air qu'ils acheminent respectivement. On comprendra encore que le nombre de bouches d'évacuation affectées au premier conduit 15,17 est indifférent.

Se pose le-problème d'une interdiction de délivrance du premier flux d'air 20,21 à travers la bouche de délivrance 7,9 qui lui est affectée, et en conséquence un risque d'une interruption du refroidissement de l'organe électrique 18,19 qu'il loge. Une telle interdiction--intervient communément suite à une requête d'un passager, et est par exemple obtenue par la manoeuvre d'un volet 24,25 d'interdiction de délivrance du premier flux d'air 20,21. Sur l'exemple de réalisation illustré, ce volet 24,25 est placé au débouché du premier conduit 15,17. Plus particulièrement, la bouche d'évacuation 7,9 affectée au premier conduit 15,17 est agencée en aérateur muni du volet 24,25. Ce dernier 24,25 est manoeuvrable entre une position d'ouverture, dans laquelle une délivrance du premier flux d'air 20,21 à travers la bouche d'évacuation 7,9 du premier conduit 15,17 est autorisée, et une position de fermeture dans laquelle cette délivrance est interdite. Le volet 24,25 est susceptible d'être manoeuvrable entre ses positions d'ouverture et de -fermeture manuellement par le passager et/ou à partir d'une information de consigne transmise par le passager par des boutons de commande à sa disposition. L'interdiction de délivrance du premier flux d'air 20,21 induit un confinement du volume intérieur du premier conduit 15,17, et en conséquence un risque d'échauffement de l'organe électrique 18,19 qui n'est plus placé dans le premier flux d'air 20,21. On relèvera que chacun des deuxièmes conduits 14,16 est susceptible d'être équipé ou non d'un volet 26,26' d'interdiction de délivrance du deuxième flux d'air 22,23 à travers les bouches d'évacuation 6,8 du deuxième conduit 14,16.

Pour éviter le risque d'échauffement de l'organe électrique 18,19, l'installation comporte des moyens de dérivation 27, 28 qui sont-placés sur le premier conduit 15, 17, et le cas échéant sur plusieurs premiers conduits respectifs tel que sur l'exemple illustré. Ces moyens de dérivation 27,28 comprennent un canal de dérivation 29,30 reliant entre eux le premier conduit 15,17 et au moins un deuxième conduit 14,16. Selon les exemples de réalisation représentés, le canal -de dérivation 29,30 est susceptible d'être formé par une fenêtre 59 ménagée à travers une cloison de séparation 31 entre le premier conduit 15 et le deuxième conduit 14, ou encore par un canal de dérivation 30 spécifique reliant une bouche de sortie 32 du premier conduit 17 à une bouche d'entrée 33 du deuxième conduit 16. Un clapet d'obturation 34,35 d'air est placé sur le canal de dérivation 29,30, pour pouvoir maintenir une circulation du premier flux d'air 20,21 à l'intérieur du circuit de -distribution 2 en cas d'une interdiction de sa délivrance à travers la bouche d'évacuation 7,9 du premier conduit 15,17. Ce clapet 34,35 est manoeuvrable entre une position de fermeture, dans laquelle la délivrance du premier flux d'air 20,21 à travers la bouche d'évacuation 7,9 du premier conduit 15,17 est autorisée, et une position d'ouverture dans laquelle le premier flux d'air 20,21 est dérivé vers le deuxième conduit 14,16 à travers le canal de dérivation 29,30, en cas d'une interdiction d'une telle délivrance. On notera que l'interdiction de délivrance étant notamment induite par une manoeuvre du volet 24,25 affecté à la bouche d'évacuation 7,9 du premier conduit 15,17, ce volet 24,25 est susceptible d'être placé en un quelconque emplacement d'un tronçon 48 du premier conduit 15,17 -s'étendant entre les- moyens -de dérivation 27,28 et la bouche d'évacuation 7,9 du premier conduit 15,17.

Le clapet 34,35 est équipé de moyens de manoeuvre 36, dont la mise en oeuvre est susceptible d'être placée sous la dépendance de moyens de commande 37 et/ou sous la dépendance de moyens de détection 38,39,40,41 de l'interdiction de délivrance du premier flux d'air 20,21 à travers la bouche d'évacuation 7,9 du premier conduit 15,17. Les moyens de commande 37 sont par exemple ceux utilisés pour manoeuvrer le volet 24,25 de la bouche d'évacuation 7,9 affectée au premier conduit 15,17, ou encore des moyens de commande spécifiques dont la mise en oeuvre est commandée depuis le tableau de bord de l'installation principale à partir d'une information -transmise par les moyens de détection 38,39,40,41 et/ou par les moyens de commande à la fermeture du volet 24,25 de la bouche d'évacuation 7,9 du premier conduit 15,17. Les moyens de détection 38,39,40,41 sont par exemple constitués par un capteur de pression 38,40 placé dans le premier conduit 15,17 pour détecter sa pressurisation au-delà d'un seuil de consigne en conséquence de l'obturation de sa bouche d'évacuation 7,9, ou encore de capteurs de détection 39,41 de la position du volet 24,25 de la bouche d'évacuation 7,9 du premier conduit 15,16. Le clapet 34,35 est aussi susceptible d'être agencé et/ou d'être monté sur le premier conduit 15,17 et/ou sur le canal de dérivation 29,30 de manière à être spontanément manoeuvrable à partir d'une pressurisation du premier conduit 15,17 au regard d'une pression de consigne et/ou à partir d'une différence de pression de consigne entre le premier conduit 15,17 et le deuxième conduit 14,16.

L'installation de ventilation comporte des dispositions pour éviter de modifier les paramètres aérothermiques du deuxième flux d'air 22,23 délivré à travers la bouche d'évacuation 6,8 du deuxième conduit 14,16, lorsque le premier flux d'air 20,21 est dérivé hors du premier conduit 15,17.

Plus particulièrement, l'installation de ventilation est munie de moyens d'ajustement 42 de la température du premier flux d'air 20,21 en fonction de la température du deuxième flux d'air 22,23, voire aussi en fonction de la température de consigne du deuxième flux d'air 22,23 à délivrer à travers la bouche d'évacuation 6,8 du deuxième conduit 14,16. Par exemple, la température du premier flux d'air 20,21 est susceptible d'être ajustée sur la température du deuxième flux d'air 22,23, correspondante à la température de consigne du deuxième flux d'air 22,23 à délivrer. Par exemple encore, le deuxième flux d'air 22,23 et le premier flux d'air 20,21 peuvent être maintenus à des températures respectives, qui sont adaptées pour l'obtention de la température de consigne du deuxième flux d'air 22,23 à délivrer suite au mélange entre le premier flux d'air 20,21 dérivé et le deuxième flux d'air 22,23 réalisé dans la zone de jonction entre le canal de dérivation 29,30 et le deuxième conduit 14,16. Dans ce dernier cas, cette zone de jonction constitue une zone de mixage entre le premier flux- d'air 20,21 et le deuxième flux d'air 22,23, pour l'obtention d'un flux global d'air à la température de consigne du deuxième flux d'air 22,23 à délivrer.

Plus particulièrement encore, l'installation de ventilation est munie de moyens de variation 43 de la vitesse de rotation de turbines 56,57 qu'elle comporte pour accélérer les flux d'air 20,21,22,23. Les mises en oeuvre respectives et/ou conjointes des moyens d'ajustement 42 et des moyens de variation 43 sont placées sous la- dépendance d'une-mise en oeuvre des moyens de dérivation 27,28. Cette dépendance est indifféremment obtenue à partir des moyens de manoeuvre 36 du clapet 34,35, des moyens de commande 37 et/ou des moyens de détection 38,39,40,41.

L'organisation des moyens de dérivation 27,28 est susceptible d'être spécifiquement adaptée selon l'architecture du circuit de distribution 2. Il est cependant préféré la solution consistant à aménager ces moyens de dérivation 27,28 à l'intérieur du boîtier aéraulique 44, constituant un module aéraulique susceptible d'être aisément implanté sur le circuit de distribution 2 entre l'organe électrique 18,19 et la bouche d'évacuation 7,9 du premier conduit 15,17.

Un tel module aéraulique est principalement constitué dans sa forme la plus simple du boîtier 44 ménageant au moins partiellement le premier conduit 15,17, et ménageant un passage de dérivation, fenêtre ou conduit, sur lequel est monté le clapet 34,35. Cependant, il est aussi souhaitable d'exploiter un boîtier existant constitutif du circuit de distribution 2 pour ménager les moyens de dérivation 27,28. Un tel boîtier 44 est notamment un boîtier aéraulique logeant un pulseur relais, destiné à accélérer des flux d'air en provenance de l'unité de traitement 1 préalablement à leur délivrance à l'intérieur de l'habitacle, notamment des flux d'air délivrés dans des zones éloignées de l'unité de traitement 1. L'exploitation d'un tel boîtier 44 est particulièrement adaptée en raison du fait qu'il contient des organes électriques 18,19 à refroidir.

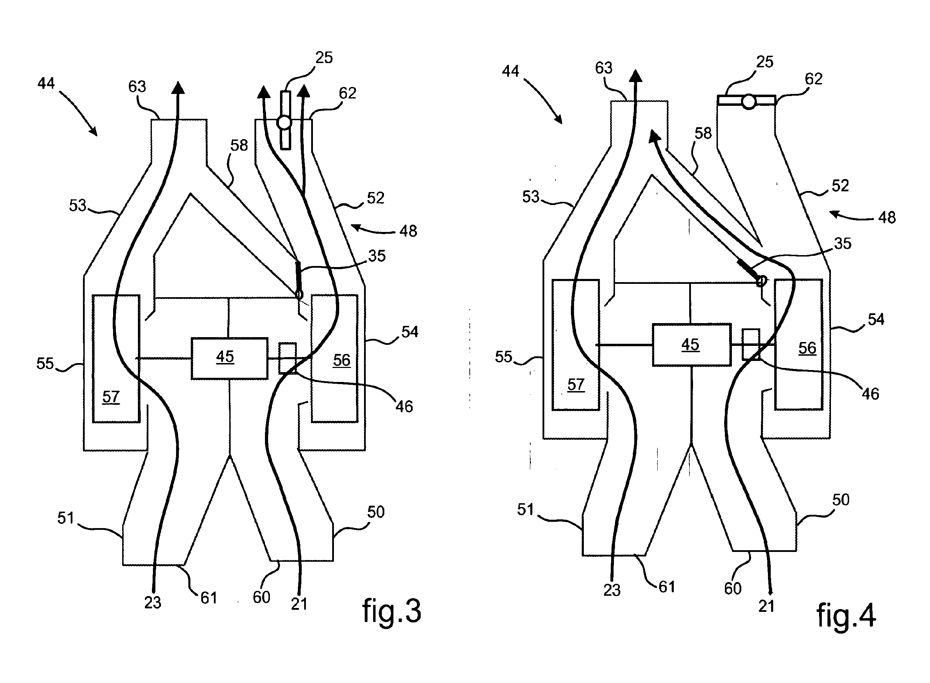

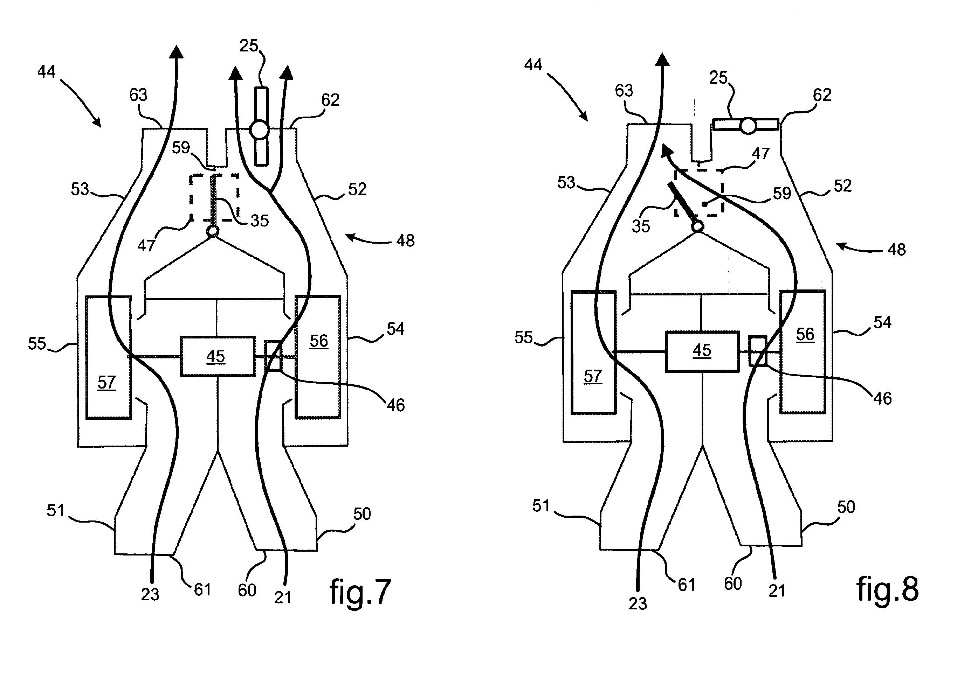

Les fig.3 à fig.8 illustrent un exemple de réalisation dudit--boîtier aéraulique 44 logeant le pulseur relais 45 et des moyens de dérivation 27,28 du premier flux d'air 20,21. Il est plus particulièrement exploité le boîtier 44 logeant un pulseur relais 45 du type à double turbine, et mettant en oeuvre des organes électriques à refroidir comprenant au moins des balais 46 d'alimentation électrique du moteur du pulseur 45, voire aussi des moyens de commande 47 du fonctionnement de ce dernier tel que représentés pour exemple sur les fig.7 et fig.8. Le boîtier 44 délimite le premier conduit 15,17 et le deuxième conduit 14,16. Le premier conduit 15,17 et le deuxième-- conduit 14,16 comportent chacun une bouche d'entrée 60,61 pour l'admission respectivement du premier flux d'air 20,21 et du deuxième flux d'air, et une bouche de sortie 62,63 pour l'évacuation respectivement du premier flux d'air 20,21 et du deuxième flux d'air. Le premier conduit 15,17 et le deuxième conduit 14,16 sont chacun composés d'une conduite d'entrée 50,51 et d'une conduite de sortie 52,53, entre lesquelles est interposée une chambre 54,55 de réception de l'une des turbines 56,57 du pulseur 45. Ces chambres 54,55 sont avantageusement agencées en volute d'accélération du flux d'air correspondant. Des organes électriques 46,47 sont placés dans la conduite d'entrée 50 et/ou dans la conduite de sortie 52 du premier conduit 15,17, mais en tout état de cause en aval des moyens de dérivation 27,28. Sur les exemples de réalisation illustrés, le clapet 24,25 est monté sur la conduite de sortie 52 du premier conduit 15,17. On comprendra cependant que le clapet 24,25 peut ne pas être porté par le boîtier 44, dès lors qu'il se trouve placé en un quelconque endroit en aval des moyens de dérivation 27,28.

L'exploitation d'un tel boîtier 44 logeant un pulseur relais 45 à double turbine est particulièrement adaptée pour structurer les moyens de dérivation 27,28 de l'invention. Une requête d'interdiction de délivrance du premier flux d'air 20,21 est susceptible d'intervenir alors qu'il est nécessaire de maintenir le fonctionnement du pulseur 45 pour accélérer le deuxième flux d'air 22,23 dont la délivrance est requise. En conséquence, les organes électriques 46,47 nécessaires au fonctionnement du pulseur 45 peuvent être sollicités pour accélérer le deuxième flux d'air 22,23 malgré une requête d'interruption de délivrance du premier flux d'air 20,21 à travers la bouche d'évacuation du -premier-conduit, -et-dans ce cas il est souhaitable de maintenir leur refroidissement. On relèvera donc une portée spécifique de la présente invention sur l'organisation d'un boîtier aéraulique 44 du type comportant un pulseur 45 à double turbine pour l'accélération de flux d'air respectivement affectés à l'une et l'autre des turbines 56,57, qui est équipé des moyens de dérivation 27,28.

Sur les fig.3 à fig.6, l'organe électrique à refroidir réside dans des balais 46 d'alimentation du pulseur -45, qui sont placés dans la conduite d'entrée- 50 du premier conduit 15,17. Le canal de dérivation est formé par un conduit de dérivation 58 interposé entre le premier conduit 15,17 et le deuxième conduit 14,16. Le clapet 35 est placé au débouché du conduit de dérivation 58 en regard sur le premier conduit 15,17.

Selon la variante représentée sur les fig.3 et fig.4, le conduit de dérivation 58 est plus particulièrement interposé entre la conduite de sortie 53 du deuxième conduit 14,16 et la conduite de sortie 52 du premier conduit 15,17, en aval de la turbine 56 logée dans la chambre 54 du premier conduit 15,17. Ces dispositions sont telles que le premier flux d'air 21 est dérivé après son accélération par la turbine 56.

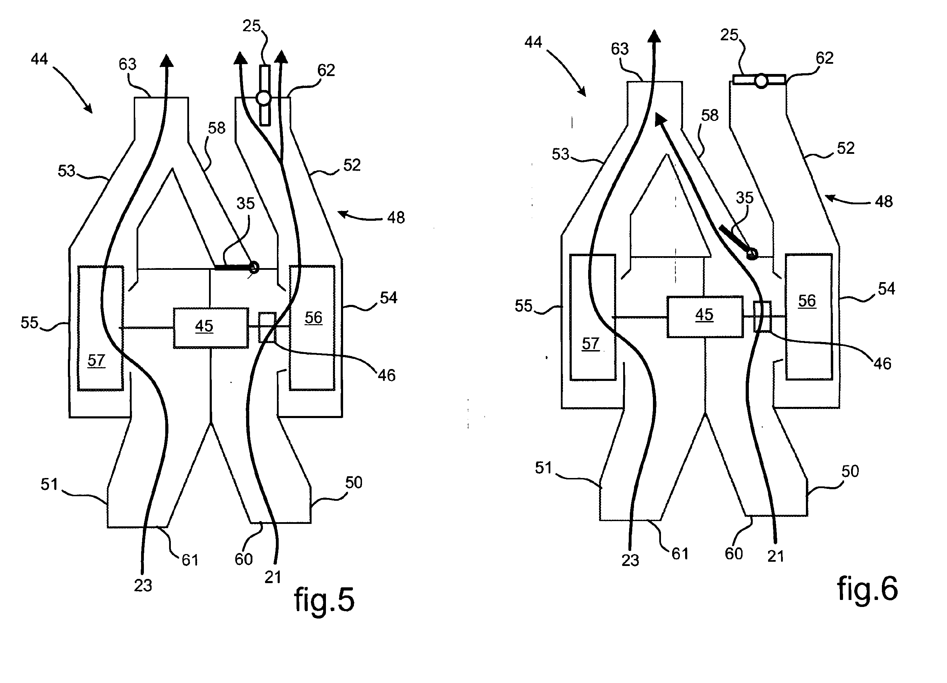

Selon la variante représentée sur les fig.5 et fig.6, le conduit de dérivation 58 est plus particulièrement interposé entre la conduite de sortie 52 du deuxième conduit 14,16 et la conduite d'entrée 50 du premier conduit 15,17, en amont de la turbine 56 logée dans la chambre 54 du premier conduit 15,17. Ces dispositions sont telles que le premier flux d'air 21 est dérivé au plus près des organes électriques 46 susceptibles de s'échauffer.

Sur les fig.7 et fig.8, les organes électriques à refroidir sont constitués par les balais 46 d'alimentation du pulseur 45, qui sont placés dans la conduite d'entrée 50 du premier conduit 15,17, et par une carte électronique de commande 47 du fonctionnement du pulseur 45, qui est placée dans le canal de dérivation. Ce canal de dérivation est formé de la fenêtre 59 ménagée entre le premier conduit 15,17 et le deuxième conduit 14,16, et plus particulièrement entre leurs conduites de sortie 52,53 respectives. La carte électronique de commande 47 est-placée au moins partiellement à l'intérieur du premier conduit 15,17, et plus particulièrement à l'intérieur de l'espace ménagé par la fenêtre 59 en chevauchement entre le premier conduit 15,17 et le deuxième conduit 14,16.

Sur les fig.3, fig.5 et fig.7, la bouche d'évacuation du premier conduit 15,17 autorise une délivrance du premier flux d'air 20,21, le volet 24,25 étant placé en position d'ouverture-pour permettre cette délivrance. Le clapet 34,35 est placé en position de fermeture pour interdire une échappée du premier flux d'air 20,21 à travers le conduit de dérivation 58 ou la fenêtre 59, et permettre son acheminement vers la bouche d'évacuation du premier conduit 15,17. Les organes électriques 46,47 sont refroidis par convexion au moyen du premier flux d'air 20,21.

Sur les fig.4, fig.6 et fig.8, la bouche d'évacuation du premier conduit 15,17 interdit une délivrance du premier flux d'air 20,21, le volet 24,25 étant placé en position de fermeture pour faire obstacle à cette délivrance. Le clapet 34,35 est placé en position d'ouverture pour autoriser une échappée du premier flux d'air 20,21 à travers le conduit de dérivation 58 ou la fenêtre 59 et sa délivrance à travers la bouche d'évacuation du deuxième conduit 14,16 Le refroidissement des organes électriques 46,47 par convexion au moyen du premier flux d'air 20,21 est maintenu malgré l'interdiction de sa délivrance à travers la bouche d'évacuation du premier conduit 15,17.

## Revendications

1. Installation de ventilation de l'habitacle d'un véhicule automobile comprenant au moins un premier (15,17) et un deuxième (14,16) conduits distincts dans lesquels circulent respectivement un premier flux d'air (20,21) et un deuxième flux d'air (22,23), le premier flux d'air (20,21) étant mis en mouvement à l'intérieur du premier conduit (15,17) par l'intermédiaire d'une première turbine (56) tandis que le deuxième flux d'air (22,23) est mis en mouvement à l'intérieur du deuxième conduit (14,16) par l'intermédiaire d'une deuxième turbine (57), les première et deuxième turbines (56,57) étant conjointement mises en oeuvre à partir d'un moteur électrique commun (45) qui est mis en rotation par l'intermédiaire d'au moins un organe électrique (18,19 ;46,47) placé dans le premier conduit (15,17) pour son refroidissement par le premier flux d'air (20,21), **caractérisée en ce qu'**elle est équipée de moyens de dérivation (27,28) du premier flux d'air (20,21) vers le deuxième flux d'air (22,23).

2. Installation selon la revendication 1, **caractérisée en ce que** les moyens de dérivation (27,28) sont placés sur le premier conduit (15,17) en aval de l'organe électrique (18,19 ;46,47).

3. Installation selon l'une quelconque des revendications précédentes, **caractérisée en ce que** la mise en oeuvre des moyens de dérivation (27,28) est placée sous la dépendance d'une interdiction de délivrance du premier flux d'air (20,21) à travers une bouche d'évacuation (7,9) affectée au premier conduit (15,17).

4. Installation selon la revendication 3, **caractérisée en ce que** la mise en oeuvre des moyens de dérivation (27,28) est placée sous la dépendance indifféremment de moyens de commande (37) et/ou de moyens de détection (38,39,40,41) de ladite interdiction de délivrance du premier flux d'air (20,21).

5. Installation selon l'une quelconque des revendications précédentes, **caractérisée en ce que** les moyens de dérivation (27,28) comprennent au moins un canal de dérivation (29,30) reliant entre eux le premier conduit (15,17) et le deuxième conduit (14,16), et au moins un clapet d'obturation (34,35) qui est placé à l'intérieur du canal de dérivation (29,30) et qui est muni de moyens de manoeuvre (36) entre des positions d'ouverture et de fermeture.

6. Installation selon la revendication 4, **caractérisée en ce que** la mise en oeuvre des moyens de manoeuvre (36) en position d'ouverture du clapet d'obturation (34,35) est placée sous la dépendance d'une manoeuvre en position de fermeture d'un volet (24,25) d'interdiction de délivrance du premier flux d'air (20,21) qui est placé à l'intérieur d'un premier tronçon (48) du premier conduit (15,17) s'étendant entre les moyens de dérivation (27,28) et la bouche d'évacuation (7,9) du premier conduit (15,17).

7. Installation selon la revendication 6, **caractérisée en ce que** la-mise en oeuvre des moyens de manoeuvre (36) en position d'ouverture du clapet d'obturation (34,35) est placée sous la dépendance d'une pressurisation du premier -conduit (15,17).

8. Installation selon l'une quelconque des revendications précédentes, **caractérisée en ce qu'**elle est équipée de moyens d'ajustement (42) de la température du premier flux d'air (20,21) en fonction de la température du deuxième flux d'air (22,23) à délivrer, dont la mise en oeuvre est placée sous la dépendance de la mise en oeuvre des moyens de dérivation (27,28).

9. Installation selon l'une quelconque des revendications précédentes, **caractérisée en ce qu'**elle est équipée de moyens de variation (43) de la vitesse de rotation des turbines- (56,57), dont la mise en oeuvre est placée sous la dépendance de la mise en oeuvre des moyens de dérivation (27,28).

10. Installation selon l'une quelconque des revendications précédentes, **caractérisée en ce qu'**elle est agencée en un boîtier aéraulique (44) délimitant les premier (15,17) et deuxième (14,16) conduits, et logeant un pulseur relais (45) à double turbine (56,57) comprenant la première turbine (56) et des balais (46) d'alimentation électrique du pulseur (45) qui sont placés à l'intérieur du premier conduit (15,17) et la deuxième turbine (57) qui est placée à l'intérieur du deuxième conduit (14,16).

11. Installation selon l'une quelconque des revendications précédentes, **caractérisée en ce qu'**elle loge des moyens de commande (47) du fonctionnement du moteur électrique commun (45), qui sont placés au moins partiellement sinon en totalité à l'intérieur du premier conduit (15,17).

12. installation selon l'une quelconque des revendications précédentes, **caractérisée en ce que** le premier conduit (15,17) et le deuxième conduit (14,16) sont chacun successivement composés d'une conduite d'entrée (50,51), d'une chambre de réception (54,55) de la turbine (56,57) qui leur est affecté, et d'une conduite de sortie (52,53).

13. Installation selon l'une quelconque des revendications 5 à 12, **caractérisée en ce que** le canal de dérivation (29,30) est indifféremment constitué d'un conduit de dérivation (58) interposé entre le premier conduit (15,17) et le deuxième conduit (14,16), ou d'une fenêtre (59) ménagée dans une cloison de séparation (31) entre le premier conduit (15,17) et le deuxième conduit (14,16).

14. Installation selon l'une quelconque des revendications 5 à 13, **caractérisée en ce que** le canal de dérivation (29,30) est indifféremment ménagé en aval d'une sortie d'air de la première turbine (56) ou en amont d'une entrée d'air de la première turbine (56).

15. Installation selon l'une quelconque des revendications 6 à 14, **caractérisé en ce que** le premier conduit (15,17) est équipé du volet (24,25) d'interdiction de délivrance du premier flux d'air (20,21).

16. Installation principale de ventilation, de chauffage et/ou de climatisation, comprenant une unité de traitement aérothermique (1) et un circuit de distribution (2) de flux d'air comportant au moins un premier conduit (15,17) et au moins un deuxième conduit (14,16), **caractérisée en ce que** le circuit de distribution (2) intègre une installation de ventilation selon l'une quelconque des revendications précédentes.

## Claims

1. Motor car interior ventilation installation comprising at least one first (15, 17) and one second (14, 16) separate canals wherein a first air flow (20, 21) and a second air flow (22, 23) circulate respectively, the first air flow (20, 21) being moved inside the first canal (15, 17) via a first blower wheel (56) whereas the second air flow (22, 23) is moved inside the second canal (14, 16) via a second blower wheel (57), the first and second blower wheels (56, 57) being operated jointly using a common electric motor (45) which is rotated via at least one electric device (18, 19; 46, 47) placed in the first canal (15, 17) for the cooling thereof by the first air flow (20, 21), **characterised in that** it is equipped with bypass means (27, 28) from the first air flow (20, 21) to the second air flow (22, 23).

2. Installation according to claim 1, **characterised in that** the bypass means (27, 28) are positioned on the first canal (15, 17) downstream from the electric device (18, 19; 46, 47).

3. Installation according to any of the above claims, **characterised in that** the operation of the bypass means (27, 28) is dependent on a first air flow (20, 21) discharge shutoff via a discharge inlet (7, 9) assigned to the first canal (15, 17).

4. Installation according to claim 3, **characterised in that** the operation of the bypass means (27, 28) is dependent on either control means (37) and/or detection means (38, 39, 40, 41) of said first air flow (20, 21) discharge shutoff.

5. Installation according to any of the above claims, **characterised in that** the bypass means (27, 28) comprise at least one bypass duct (29, 30) interconnecting the first canal (15, 17) and the second canal (14, 16), and at least one shutter valve (34, 35) which is placed inside the bypass duct (29, 30) and which is provided with means (36) for manipulating between opening and closing positions.

6. Installation according to claim 5, **characterised in that** the operation of the means (36) for manipulating the shutter valve (34, 35) in the opening position is dependent on a manipulation in the closing position of a first air flow (20, 21) discharge shutoff flap (24, 25) which is placed inside a first section (48) of the first canal (15, 17) extending between the bypass means (27, 28) and the discharge inlet (7, 9) of the first canal (15, 17).

7. Installation according to claim 6, **characterised in that** the operation of the means (36) for manipulating the shutter valve (34, 35) in the opening position is dependent on pressurisation of the first canal (15, 17).

8. Installation according to any of the above claims, **characterised in that** it is equipped with means (42) for adjusting the temperature of the first air flow (20, 21) as a function of the temperature of the second air flow (22, 23) to be discharged, the operation whereof is dependent on the operation of the bypass means (27, 28).

9. Installation according to any of the above claims, **characterised in that** it is equipped with means (43) for varying the running speed of the blower wheels (56, 57), the operation whereof is dependent on the operation of the bypass means (27, 28).

10. Installation according to any of the above claims, **characterised in that** it is arranged in a ventilation housing (44) defining the first (15, 17) and second (14, 16) canals, and housing a relay blower (45) with double wheel (56, 57) comprising the first blower wheel (56) and the electric power supply wiper contacts (46) of the blower (45) which are placed inside the first canal (15, 17) and the second blower wheel (57) which is placed inside the second canal (14, 16).

11. Installation according to any of the above claims, **characterised in that** it houses means (47) for controlling the operation of the common electric motor (45), which are placed at least partially or completely inside the first canal (15, 17).

12. Installation according to any of the above claims, **characterised in that** the first canal (15, 17) and the second canal (14, 16) each successively consist of an inlet duct (50, 51), a reception chamber (54, 55) of the blower wheel (56, 57) assigned thereto, and an outlet duct (52, 53).

13. Installation according to any of claims 5 to 12, **characterised in that** the bypass duct (29,30) consists either of a bypass duct (58) inserted between the canal (15, 17) and the second canal (14, 16), or a slot (59) provided in a separation (31) between the first canal (15, 17) and the second canal (14, 16).

14. Installation according to any of claims 5 to 13, **characterised in that** the bypass duct (29, 30) is either provided downstream from an air outlet of the first blower wheel (56) or upstream from an air inlet of the first blower wheel (56).

15. Installation according to any of claims 6 to 14, **characterised in that** the first canal (15, 17) is equipped with the first air flow (20, 21) discharge shutoff flap (24, 25).

16. Primary ventilation, heating and/or air conditioning installation, comprising an aerothermal treatment unit (1) and an air flow distribution circuit (2) comprising at least one first canal (15, 17) and at least one second canal (14, 16), **characterised in that** the distribution circuit (2) incorporates a ventilation installation according to any of the above claims.

## Patentansprüche

1. Anlage für die Belüftung des Fahrgastraums eines Kraftfahrzeuges, umfassend mindestens einen ersten (15, 17) und einen zweiten (14, 16) Kanal, die unterschiedlich sind und in denen jeweils ein erster Luftfluss (20, 21) und ein zweiter Luftfluss (22, 23) zirkulieren, wobei der erste Luftfluss (20, 21) im Inneren des ersten Kanals (15, 17) mittels eines ersten Lüfterrads (56) in Bewegung gesetzt wird, während der zweite Luftfluss (22, 23) im Inneren des zweiten Kanals (14, 16) mittels eines zweiten Lüfterrads (57) in Bewegung gesetzt wird, wobei das erste und das zweite Lüfterrad (56, 57) zusammen von einem gemeinsamen Elektromotor (45) in Gang gesetzt werden, der über mindestens eine elektrische Vorrichtung (18, 19; 46, 47) in Drehung versetzt wird, die im ersten Kanal (15, 17) für deren Abkühlung durch den ersten Luftfluss (20, 21) angeordnet ist, **dadurch gekennzeichnet, dass** sie mit Mitteln zum Umleiten (27, 28) des ersten Luftflusses (20, 21) in Richtung des zweiten Luftflusses (22, 23) ausgestattet ist.

2. Anlage nach Anspruch 1, **dadurch gekennzeichnet, dass** die Umleitmittel (27, 28) auf dem ersten Kanal (15, 17), der elektrischen Vorrichtung (18, 19; 46, 47) nachgelagert, angeordnet sind.

3. Anlage nach einem der vorhergehenden Ansprüche, **dadurch gekennzeichnet, dass** die Betätigung der Umleitmittel (27, 28) von einem Austrittsverbot des ersten Luftflusses (20, 21) durch die Abfließöffnung (7, 9), die dem ersten Kanal (15, 17) zugeordnet ist, abhängig gemacht wird.

4. Anlage nach Anspruch 3, **dadurch gekennzeichnet, dass** die Betätigung der Umleitmittel (27, 28) unterschiedslos von Steuermitteln (37) und/oder von Mitteln zum Erfassen (38, 39, 40, 41) des Austrittsverbots des ersten Luftflusses (20, 21) abhängig gemacht wird.

5. Anlage nach einem der vorhergehenden Ansprüche, **dadurch gekennzeichnet, dass** die Umleitmittel (27, 28) mindestens eine Umleitleitung (29, 30), die den ersten Kanal (15, 17) und den zweiten Kanal (14, 16) miteinander verbindet, und mindestens eine Verschlussklappe (34, 35) umfassen, die im Inneren der Umleitleitung (29, 30) angeordnet ist und die mit Mitteln zur Verschiebung (36) zwischen einer Öffnungs- und einer Schließposition ausgestattet ist.

6. Anlage nach Anspruch 5, **dadurch gekennzeichnet, dass** die Betätigung der Mittel zur Verschiebung (36) der Verschlussklappe (34, 35) in Öffnungsposition abhängig gemacht wird von einer Verschiebung einer Klappe (24, 25) für das Austrittsverbot des ersten Luftflusses (20, 21) in Schließposition, die im Inneren eines ersten Teilstücks (48) des ersten Kanals (15, 17) angeordnet ist, das sich zwischen den Umleitmitteln (27, 28) und der Abfließöffnung (7, 9) des ersten Kanals (15, 17) erstreckt.

7. Anlage nach Anspruch 6, **dadurch gekennzeichnet, dass** die Betätigung der Mittel zur Verschiebung (36) der Verschlussklappe (34, 35) in Öffnungsposition von einem Druckausgleich des ersten Kanals (15, 17) abhängig gemacht wird.

8. Anlage nach einem der vorhergehenden Ansprüche, **dadurch gekennzeichnet, dass** sie mit Mitteln zum Anpassen (42) der Temperatur des ersten Luftflusses (20, 21) in Abhängigkeit von der Temperatur des zweiten, abzugebenden Luftflusses (22, 23) ausgestattet ist, deren Betätigung von der Betätigung der Umleitmittel (27, 28) abhängig gemacht wird.

9. Anlage nach einem der vorhergehenden Ansprüche, **dadurch gekennzeichnet, dass** sie mit Mitteln zum Regeln (43) der Drehzahl der Lüfterräder (56, 57) ausgestattet ist, deren Betätigung von der Betätigung der Umleitmittel (27, 28) abhängig gemacht wird.

10. Anlage nach einem der vorhergehenden Ansprüche, **dadurch gekennzeichnet, dass** sie in einem Lufttechnikgehäuse (44) angeordnet ist, das den ersten (15, 17) und zweiten (14, 16) Kanal begrenzt und in dem ein Schaltgebläse (45) mit zwei Lüfterrädern (56, 57) untergebracht ist, das das erste Lüfterrad (56) und Bürsten (46) für die elektrische Versorgung des Gebläses (45), die im Inneren des ersten Kanals (15, 17) angeordnet sind, und das zweite Lüfterrad (57) umfasst, das im Inneren des zweiten Kanals (14, 16) angeordnet ist.

11. Anlage nach einem der vorhergehenden Ansprüche, **dadurch gekennzeichnet, dass** darin Steuermittel (47) für den Betrieb des gemeinsamen Elektromotors (45) untergebracht sind, die mindestens teilweise, wenn nicht zur Gänze im Inneren des ersten Kanals (15, 17) angeordnet sind.

12. Anlage nach einem der vorhergehenden Ansprüche, **dadurch gekennzeichnet, dass** der erste Kanal (15, 17) und der zweite Kanal (14, 16) jeweils aufeinander folgend aus einem Eintrittskanal (50, 51), einer Aufnahmekammer (54, 55) für das Lüfterrad (56, 57), das ihnen zugeordnet ist, und einem Austrittskanal (52, 53) bestehen.

13. Anlage nach einem der Ansprüche 5 bis 12, **dadurch gekennzeichnet, dass** die Umleitleitung (29, 30) unterschiedslos von einem Umleitkanal (58), der zwischen dem ersten Kanal (15, 17) und dem zweiten Kanal (14, 16) eingefügt ist, oder von einem Fenster (59) gebildet wird, das in einer Trennwand (31) zwischen dem ersten Kanal (15, 17) und dem zweiten Kanal (14, 16) ausgeführt ist.

14. Anlage nach einem der Ansprüche 5 bis 13, **dadurch gekennzeichnet, dass** die Umleitleitung (29, 30) unterschiedslos einem Luftaustritt des ersten Lüfterrads (56) nachgelagert oder einem Lufteintritt des ersten Lüfterrads (56) vorgelagert ausgeführt ist.

15. Anlage nach einem der Ansprüche 6 bis 14, **dadurch gekennzeichnet, dass** der erste Kanal (15, 17) mit einer Klappe (24, 25) für das Austrittsverbot des ersten Luftflusses (20, 21) ausgestattet ist.

16. Hauptanlage zur Belüftung, Heizung und/oder Klimasteuerung, umfassend eine Luftwärme-Behandlungseinheit (1) und einen Verteilungskreislauf (2) des Luftflusses mit mindestens einem ersten Kanal (15, 17) und mindestens einem zweiten Kanal (14, 16), **dadurch gekennzeichnet, dass** in den Verteilungskreislauf (2) eine Belüftungsanlage nach einem der vorhergehenden Ansprüche integriert ist.
